# EUROPEAN PATENT SPECIFICATION

(11) **EP 2 158 382 B1**
(45) Date of publication and mention of the grant of the patent: **10.08.2016**
(21) Application number: 08761041.6
(22) Date of filing: 16.06.2008
(51) Int. Cl.: F01N 3/20

(54) **PROCESS FOR STARTING A PUMP**
STARTVERFAHREN FÜR EINE PUMPE
PROCÉDÉ POUR DÉMARRER UNE POMPE

(30) Priority: 20.06.2007 FR 0755875
(43) Date of publication of application: 03.03.2010
(73) Proprietor: Plastic Omnium Advanced Innovation and Research, 1120 Bruxelles (BE)
(72) Inventor: HABUMUREMYI, Jean-Claude, B-9450 Haaltert (BE)
(74) Representative: de la Bigne, Guillaume Michel Marie
(86) International application number: PCT/EP2008/057524
(87) International publication number: WO 2008/155303

(56) References cited:
- EP-A- 1 669 567
- EP-A- 1 712 754
- US-A- 5 884 475
- US-A1- 2005 207 936

## Description

The present application relates to a process for starting a pump intended to pump a liquid that is capable of freezing or solidifying. It relates, in particular, to starting pumps intended for aqueous urea solutions.

Legislation on vehicle and heavy goods vehicle emissions stipulates, amongst other things, a reduction in the release of nitrogen oxides NOₓ into the atmosphere. One known way to achieve this objective is to use the SCR (Selective Catalytic Reduction) process which enables the reduction of nitrogen oxides by injection of a reducing agent, generally ammonia, into the exhaust line. This ammonia may derive from the pyrolytic decomposition of an ammonia precursor solution, whose concentration may be the eutectic concentration. Such an ammonia precursor is generally a urea solution.

With the SCR process the high levels of NOₓ produced in the engine during combustion at optimized efficiency are treated in a catalyst on exiting the engine. This treatment requires the use of the reducing agent at a precise concentration and of extreme quality. The solution is thus accurately metered and injected into the exhaust gas stream where it is hydrolysed before converting the nitrogen oxide (NOₓ) to nitrogen (N₂) and water (H₂O).

In order to do this, it is necessary to equip the vehicles with a tank containing an additive solution (generally an aqueous urea solution) and also a device for metering the desired amount of additive and injecting it into the exhaust line. Given that the aqueous urea solution generally used for this purpose (eutectic 32.5 wt% urea solution) freezes at -11°C, it is necessary to provide a heating device to liquefy the solution in order to be able to inject it into the exhaust line in the event of starting in freezing conditions. This device should ideally cover at least one part of the storage tank and also the line going from this tank to the injector, and preferably also the devices encountered in this line (filter, pump, etc.).

In motor vehicles, the temperature margin in which the systems must operate generally lies between -40°C and 80°C (depending on the countries/regions). It is therefore necessary to ensure that the pump can start in the low-temperature ranges, knowing that the aforementioned solutions have a tendency to crystallize starting from -8°C.

Determination of the actuation time of the "cold" pump (i.e. the time that it is necessary to wait in order to have melted a minimum of liquid and to enable the pump to be started) may be based on experimental data obtained at various temperatures over a given system.

The tests that generate this data are generally carried out in a cold room and the effects of wind, vehicle vibrations, changes in the initial temperature conditions, etc. are not taken into account. There are therefore situations where the pump will not be actuated since the starting time has been underestimated (in the case of changing situations, for example). These situations may furthermore lead to irreversible pump damage. Conversely, the actuation time may have been overestimated (which is furthermore generally the case for safety reasons) and the pollution-control system is then not optimal.

It should be noted that the starting time could also be calculated based on thermodynamic and thermal data, but the results obtained would again not take into account practical parameters of variability.

Although some documents briefly describe the cold starting of SCR systems (see, for example, documents US 5,884,475 and US 2002/0088220), none of these documents addresses the problem of the optimal determination of the pump actuation time.

Document EP 1 669 567 describes an exhaust emission purifying apparatus for an engine, which comprises a reduction catalyst disposed in an engine exhaust system, for reductively purifying nitrogen oxides with a reducing agent, a reducing agent oxidation catalyst disposed on an exhaust downstream side of said reduction catalyst, for oxidizing the reducing agent passed through said reduction catalyst, a storage tank storing therein the reducing agent, a reducing agent supply device that supplies the reducing agent from said storage tank to said reduction catalyst, a first discharge-forcing device that forcibly discharges a gas in an upper space of said storage tank to an intake system or said exhaust system on an upstream side of said reducing agent oxidation catalyst, a temperature detecting device that detects a temperature of said reducing agent oxidation catalyst, and a first operation control device that operates said first discharge-forcing device when the temperature detected by said temperature detecting device reaches an activating temperature for said reducing agent oxidation catalyst or above.

The present invention aims to solve this problem by providing a process which makes it possible to optimize the pump starting time without damaging this pump.

For this purpose, the present application relates to a process for starting a pump intended to pump a liquid contained in a tank and to produce a substantially constant outlet pressure (setpoint pressure), according to which:
1. the temperature (T1) of the liquid held in the tank is determined and compared to a setpoint temperature (T0);
2. if the temperature (T1) is greater than the setpoint temperature (T0), the pump is actuated;
3. if the temperature (T1) is less than or equal to the setpoint temperature (T0), the tank is heated for a time t1; then
4. the pump is actuated for a time t2 during which the pump outlet pressure is measured;
5. if this pressure is stable and in an acceptable margin of the setpoint pressure, the pump is kept going;
6. if this pressure is not stable and/or is not in the acceptable margin of the setpoint pressure, the pump is stopped and the tank is heated for a time t3, at the end of which steps 4 to 6 are repeated.

The pump to which the invention applies is a pump of any known type, preferably driven by a motor and the operation of which is controlled by a controller. Preferably, the pump is of the gear pump type. It generally comprises a stator and a rotor and can preferably operate in two opposite rotational directions, one generally corresponding to supplying the feed line with liquid and the other generally corresponding to a purge of the feed line.

Any type of rotary electric motor may be suitable. Preferably, the motor is of the BLDC (brushless direct current) motor type. In this case, the pump is driven by a magnetic coupling between the rotor of the pump and a drive shaft of the motor.

The controller of this pump is a control module (generally comprising a PID regulator and a motor rotational speed controller) and an electric power supply unit which preferably supplies the motor with the power required to rotate it at the desired speed and which enables its direction of rotation to be reversed, where necessary.

Most particularly preferably, an ECM (Electronic Control Module) sends, to the pump controller, a PWM (Pulse Width Modulation) control signal having a duty cycle that varies as a function of the desired operating conditions for the pump and according to which the controller acts on the motor to apply said operating conditions to the pump. This preferred variant is the subject of Application FR 0700358 in the name of the Applicant, the subject of which is incorporated by reference in the present application.

As explained previously, the liquid for which the invention is intended is a liquid capable of freezing or solidifying (setting solid) when the temperature reaches a low temperature threshold. These may, for example, be aqueous solutions. One liquid to which the present invention applies particularly well is urea.

The term "urea" is understood to mean any, generally aqueous, solution containing urea. The invention gives good results with eutectic water/urea solutions for which there is a standard quality: for example, according to the standard DIN 70070, in the case of the AdBlue^{®} solution (commercial solution of urea), the urea content is between 31.8% and 33.2% (by weight) (i.e. 32.5 +/-0.7 wt%) hence an available amount of ammonia between 18.0% and 18.8%. The invention may also be applied to the urea/ammonium formate mixtures, also in aqueous solution, sold under the trade name Denoxium™ and of which one of the compositions (Denoxium-30) contains an equivalent amount of ammonia to that of the Adblue^{®} solution. The latter have the advantage of only freezing from -30°C onwards (as opposed to -11°C), but have the disadvantages of corrosion problems linked to the possible release of formic acid and a less available market (whereas urea is widely used and readily available even in fields such as agriculture). The present invention is particularly advantageous in the context of eutectic water/urea solutions.

According to the invention, the liquid is held in a tank which may be made from any material, preferably one having good chemical resistance to the liquid in question. In general, this is metal or plastic. Polyolefins, in particular polyethylene (and more particularly HDPE or high-density polyethylene), constitute preferred materials, in particular in the case where the liquid is urea.

This tank may be produced by any conversion processes known in the case of hollow bodies. One preferred processing method, in particular when the tank is made of plastic, and in particular HDPE, is the extrusion-blow moulding process. In this case a parison (in one or more parts) is obtained by extrusion, and is then shaped by blow moulding in a mould. One-part moulding of the tank from a single parison gives good results.

This tank is advantageously equipped with a base plate or mounting plate (i.e. a support having substantially the shape of a plate) onto which at least one active accessory of the urea storage system and/or injection system is attached. This base plate generally has a perimeter, closed up on itself, of any shape. Usually, its perimeter has a circular shape.

In a particularly preferred manner, this base plate is a submerged mounting plate, i.e. sealing an opening in the lower wall of the tank. The expression "lower wall" is in fact understood to mean the lower half of the tank (whether or not it is moulded in one piece or from two parison sheets or cut-outs). Preferably, the base plate is located in the lower third of the tank, and more particularly preferably, in the lower quarter, or even squarely in the bottom of this tank. It may be partly in the lower side wall, in which case it is slightly slanted once mounted in the vehicle. The location and/or direction of the base plate especially depends on the location of the tank in the vehicle, and on the space occupied around it (considering the components to be integrated therein).

This base plate therefore incorporates at least one component that is active during storage and/or injection. This is understood to mean that the component is attached to or produced as one part with the base plate. This component may be incorporated inside the tank, or on the outside with, if necessary, a connection (delivery tube) passing through it.

Preferably, the base plate according to this variant of the invention integrates several active storage and/or metering components and, most particularly preferably, it integrates all the active components which are brought to be in contact with the liquid additive found in, leaving from or arriving into the additive tank.

Preferably, the component is chosen from the following elements: a pump; a filter; a level gauge; a temperature sensor; a quality sensor; a pressure sensor and a pressure regulator. It is advantageous for the pump of the process according to the invention to be integrated into such a base plate and for this base plate to integrate other active components (preferably all the active components) as defined above.

Preferably, the base plate also integrates at least one heating element and most particularly preferably this heating element comprises at least one flexible part (as described in Application FR 0755118 in the name of the Applicant, the content of which is incorporated by reference in the present application) which is preferably a flexible heater, i.e. a heater comprising one or more resistive track(s) affixed to a film or placed between two films (i.e. two substantially flat supports, the material and thickness of which are such that they are flexible). This film is preferably made of a plastic (although any other insulating material may be suitable) and, in particular, is based on an elastomer. Most particularly preferably, this flexible heater comprises one or more stainless steel resistive track(s) sandwiched between two silicone resin films, one of which is covered with a network of glass fibres.

Preferably, the heating element extends inside the tank, and is therefore submerged (partially or completely) in the liquid when the tank is full. Most particularly preferably, the heating element predominantly consists of a flexible heater. Preferably, there is also a heating element (wire or flexible heater) present around the urea feed line up to the injector and the return line, where appropriate. Specifically, in one preferred variant of the invention, the pump intentionally meters too great an amount (pressure) of liquid, the excess of which is returned to the tank, for example using a line equipped with a calibrated valve. When the urea is injected into the exhaust gases of an engine, this variant makes it possible to cool the injector but it should however be noted that the non-return lines are more advantageous, economically speaking.

Preferably, the element heating these lines is also a flexible heater.

In one advantageous variant of the invention, the feed line is purged after each use of the pump (just before it is stopped) in order to reduce the starting time of the system and avoid prematurely damaging the lines (as the urea solutions expand when it freezes). The purge may be carried out, for example, by reversing the rotational direction of the pump just for the time necessary to convey the liquid contained in the feed line back to the tank.

As regards the return line, if present, it generally has a relatively low volume and therefore, if it is heated, it should not be purged while the pump is stopped. Therefore, to prevent the liquid from going round in circles in the loop determined by the feed line and the return line during the purge when this is carried out by reversing the rotational direction of the pump, it is advantageous to equip the return line with a non-return valve.

According to the invention, before starting the pump, the temperature (T1) of the liquid held in the tank is determined and compared to a setpoint temperature (T0) (step 1 of the process). Generally, this measurement is carried out using a temperature sensor which is advantageously integrated into a base plate as described previously. The setpoint temperature (T0) is generally that at which the liquid begins to solidify. When it is a question of a liquid capable of freezing or crystallizing, this temperature is generally that of the start of said crystallization (namely around -8°C for eutectic water/urea solutions).

If the temperature measured is greater than T0, the pump is actuated, for example by sending a PWM signal corresponding to the setpoint pressure to the ECM.

If the temperature measured is less than or equal to T0, the tank is heated for a time t1. This time is a function of the temperature measured and is generally the minimum time required to obtain a volume of liquid equal to the volume of the injection line and the return line, where appropriate (including the internal volume of the accessories placed in this line, such as filter, pump, etc.). As explained previously, this time may be deduced from experimental data and/or theoretical calculations.

In practice, the ECM may send a signal to a heating element integrated into the tank (preferably into a submerged base plate as explained previously), so that this tank is heated at a given power for the time t1.

At the end of this time, the pump is actuated (with a suitable command depending on the setpoint pressure) for a time t2 during which the pump outlet pressure is measured (step 4 of the process, if necessary). Again, this may be carried out using the ECM which sends a signal to the pump controller instructing it to actuate the pump under the conditions required to reach the setpoint pressure, for a time t2, and to effectively measure this pressure. Measurement of the pressure over this period is carried out at very precise times, which is generally possible via the use of a real-time operating system (for example, every 50 ms).

In one advantageous variant, the controller is connected to a pressure sensor and it compares, in a loop, the pressure setpoint value with the value measured by the sensor and consequently acts on the rotational speed of the motor in order to attempt to stabilize the pressure at the setpoint value.

Generally, this is done using a pressure regulator which carries out the comparison between the setpoint pressure and the pressure measured and generates an error signal for the motor rotational speed controller.

In this variant, the regulator may be of any known type, but it is preferably of PID (Proportional-Integral-Derivative) type. As regards the pressure sensor, it is preferably integrated with the pump, that is to say that it may be attached to the pump by any known attachment means.

The time t2, during which the stability of the pressure is verified, is preferably short enough so that the pump does not risk being damaged if it operates when empty and long enough so that the stability of the outlet pressure can be verified. Generally, a time of the order of seconds (even tens of seconds) is suitable.

If, during the period t2, the pressure was effectively stable and in an acceptable margin of the setpoint value (see later on) the controller keeps the pump going and signals to the ECM of the system that the pump has started correctly.

If, on the other hand, this pressure was not stable and/or was not in an acceptable margin with respect to the setpoint pressure, the pump is stopped (generally via a specific PWM signal sent by the ECM) and the tank is heated for a time t3 before restarting the pump and again verifying the stability of the outlet pressure over a period t2 in an iterative manner until a stable setpoint pressure is reached and this information is sent to the ECM, or information is sent to the ECM, according to which information the pump has not been able to be started if, for example, after a limited number (for example, 4) of attempts at starting, a stable pressure has not been able to be obtained.

To verify the stability of the pressure and the accuracy of its value (i.e. the fact that it is or is not in an acceptable margin with respect to the setpoint pressure), the controller applies a given mathematical criterion to the pressure measurements and to the setpoint pressure. A criterion based on the variance gives good results. According to this, over the interval t2, the average distance of n successive pressure measurements carried out over this interval is evaluated relative to the reference pressure (i.e. for each of the n measurements, the square of the difference between the pressure measured and the setpoint pressure is calculated, the n values of the squares thus obtained are added together and this sum is divided by n). Therefore, the average variance of the pressure over the period t2 is in fact calculated and it is compared with the maximum variance of the pump specifications.

Generally, an acceptable margin is defined as being a few % deviation with respect to the setpoint pressure. In practice, this value should often not exceed 2% of the setpoint pressure after the transient control phase. In this case, the pressure over the period t2 will be stable if the average variance defined above and calculated over the period t2 is less than (0.02)² multiplied by the square of the pressure. If this is the case, the criterion of variance is judged to be satisfied and the controller keeps the pump going (for example by applying a voltage to it that corresponds to the setpoint pressure).

If this is not the case, the controller stops the pump (generally by means of a suitable command) or if the pump is blocked, a pump diagnostics manager (if one exists) may short-circuit the voltage (by earthing it).

The signal that the controller sends to the ECM in order to signal to it if the pump has started correctly may consist of precisely this voltage.

In practice, the time to measure a pressure and calculate the average variance over the latter combined pressure measurements is of the order of tens of ms (milliseconds) which makes it possible, for a time t2 of the order of seconds, to carry out several tens of separate determinations of the variance.

The process according to the invention has been successfully tested in a MATLAB/SIMULINK^{®} simulation environment and a computer controlling an SCR system.

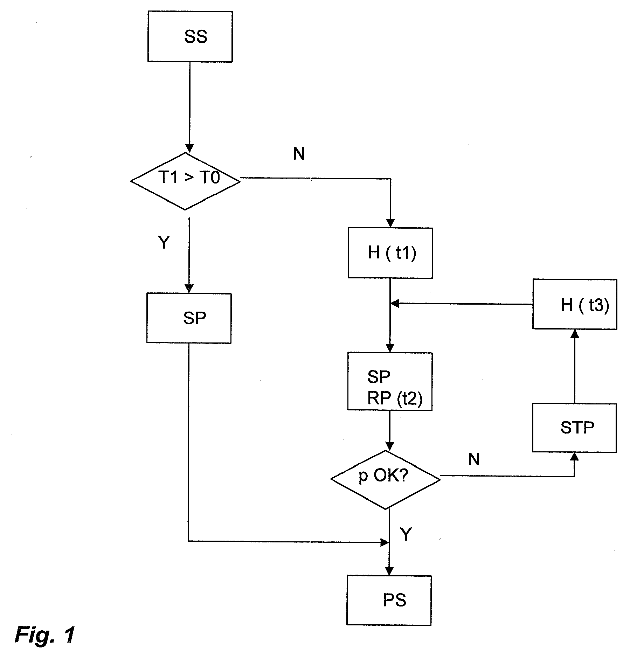

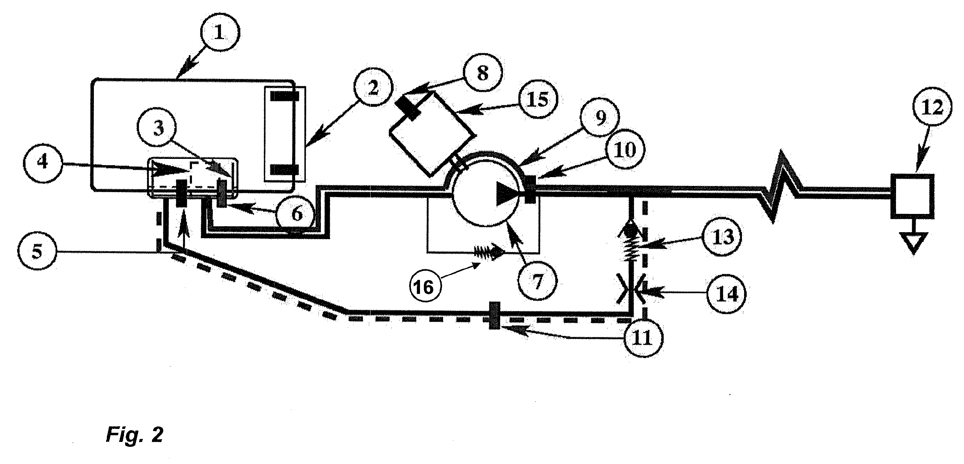

The present invention is illustrated, non-limitingly, by appended Figures 1 and 2.

Figure 1 consists of a block diagram of one preferred variant of the process according to the invention applied to a system for the injection of urea into the exhaust gases of an internal combustion engine (or SCR system) and Figure 2 illustrates one preferred variant of such a system.

From the start up of the urea system or SS (Start System), the system controller verifies whether the temperature is above the low temperature threshold (T1 > T0) in the tank in order to be able to start the pump without risk of damaging it.

If this is the case (Y or YES), it effectively starts the pump (SP) and sends a corresponding signal (PS or Pump Started) to an ECM.

If this is not the case (N or NO), it heats the tank and the lines (urea feed and return lines, where appropriate) of the system for a time t1 (H(t1)). Next, it starts the pump (SP) and over a time t2, it regularly measures the pressure at the pump outlet and calculates the change in its variance (RP(t2)). At the end of t2, it compares the average variance of the pressure (or its covariance) and compares it to a setpoint value (p OK?).

It this is below the setpoint value (Y), the controller keeps the pump going and signals to the ECM that the pump has indeed started (PS).

If the covariance is above the desired value (N), the controller stops the pump (STP or Stop Pump). Next, it again heats the tank and the lines for a time t3 (H(t3)) before restarting it (SP) and reverifying the stability of the pressure over a period t2 (RP(t2)), etc. This continues until a stable setpoint pressure is reached, the pump is kept going and the ECM is informed of that, or is informed that the pump has a problem if, at the end of 4 iterations, a stable pressure has not been reached.

As mentioned above, Figure 2 illustrates an SCR system to which the block diagram from Figure 1 applies and which comprises the following components (previously described in the description):
- 1:: urea tank;
- 2:: gauge (level sensor);
- 3:: flexible heater;
- 4:: filter;
- 5:: temperature sensor;
- 6:: current sensor for the flexible heater;
- 7:: pump;
- 8:: speed sensor;
- 9:: heating filament for the lines and pump heating cartridge;
- 10:: pressure sensor;
- 11:: current sensor for the line heater;
- 12:: injector;
- 13:: non-return valve that prevents the liquid from going round in circles (in the loop created by the feed line and that for return to the tank) during the purge (when the pump rotates in reverse);
- 14:: calibrated orifice (restriction) - used to set the flow rate and to add resistance in order to increase the pressure (by increasing pressure drops in the return line);
- 15:: (BLDC) motor for driving the pump;
- 16:: non-return valve that enables the pressure at the pump outlet to be regulated.

## Claims

1. Process for starting a pump intended to pump a liquid contained in a tank and which is a solution of additive for injection into the exhaust line of an internal combustion engine, and to produce a substantially constant outlet pressure (setpoint pressure), according to which:
1. the temperature (T1) of the liquid held in the tank is determined and compared to a setpoint temperature (T0);
2. if the temperature (T1) is greater than the setpoint temperature (T0), the pump is actuated;
3. if the temperature (T1) is less than or equal to the setpoint temperature (T0), the tank is heated for a time t1; then
4. the pump is actuated for a time t2 during which the pump outlet pressure is measured;
5. if this pressure is stable and in an acceptable margin of the setpoint pressure, the pump is kept going;
6. if this pressure is not stable and/or is not in the acceptable margin of the setpoint pressure, the pump is stopped and the tank is heated for a time t3, at the end of which steps 4 to 6 are repeated.

2. Process according to the preceding claim, in which the pump is driven by a motor and is controlled by a controller and in which an ECM (Electronic Control Module) sends, to the controller, a PWM (Pulse Width Modulation) control signal having a duty cycle that varies as a function of the desired operating conditions for the pump, the controller acting on the motor to apply said operating conditions to the pump.

3. Process according to any one of the preceding claims, in which the liquid is an aqueous urea solution.

4. Process according to any one of the preceding claims, in which the pump is integrated into a base plate submerged in the tank which also integrates other active components of the tank.

5. Process according to the preceding claim, in which the base plate integrates a heating element.

6. Process according to the preceding claim, in which a liquid feed line comes out of the tank and a liquid return line arrives at the tank and in which these lines are also equipped with a heating element.

7. Process according to the preceding claim, in which the pump is a rotary pump and in which the lines are purged after each use of the pump by reversing its direction of rotation for the time necessary to convey the liquid contained in the feed and return lines back to the tank.

8. Process according to Claim 6 or 7, in which the time t1 is the minimum time required to obtain a volume of liquid equal to the volume of the injection line, the return line and the components in these lines.

9. Process according to Claim 2, in which the controller is connected to a pressure sensor and in which the controller compares, in a loop, the pressure setpoint value with the value measured by the sensor and consequently acts on the rotational speed of the motor in order to attempt to stabilize the pressure at the setpoint value.

10. Process according to the preceding claim, in which during the period t2, the pressure is measured periodically and a mathematical criterion based on the variance is applied to the pressure measurements and to the setpoint pressure.

11. Process according to the preceding claim, in which, if the pressure is not stable and/or is not in an acceptable margin with respect to the setpoint pressure at the end of several iterations, the controller stops the pump and sends information to the ECM, according to which information the pump has not been able to be started.

## Patentansprüche

1. Verfahren zum Starten einer Pumpe, die dazu bestimmt ist, eine in einem Tank befindliche Flüssigkeit, welche eine Additivlösung ist, zur Einspritzung in eine Abgasleitung einer internen Verbrennungsmaschine zu pumpen, und einen im wesentlichen konstanten Ausgangsdruck (Solldruck) zu erzeugen, wonach:
1. die Temperatur (T1) der in dem Behälter enthaltenden Flüssigkeit bestimmt wird und mit einer Solltemperatur (T0) verglichen wird;
2. wenn die Temperatur (T1) größer ist als die Solltemperatur (T0), die Pumpe betätigt wird;
3. wenn die Temperatur (T1) kleiner als oder gleich die Solltemperatur (T0) ist, der Tank für eine Zeit t1 erwärmt wird; dann
4. die Pumpe für eine Zeit t2, während der der Pumpenausgangsdruck gemessen wird, betätigt wird;
5. wenn dieser Druck stabil ist und in einem akzeptablen Toleranzbereich des Solldrucks ist, die Pumpe in Gang gehalten wird;
6. wenn dieser Druck nicht stabil ist und/oder nicht in dem akzeptablen Toleranzbereich des Solldrucks ist, die Pumpe angehalten wird und der Tank für eine Zeit t3 erwärmt wird, woraufhin Schritte 4 bis 6 wiederholt werden.

2. Verfahren nach dem vorhergehenden Anspruch, bei dem die Pumpe durch einen Motor angetrieben wird und durch eine Steuerung gesteuert wird und bei dem ein ECM (elektronisches Steuermodul) an die Steuerung ein PWM (Pulse Width Modulation) Steuersignal mit einem Betriebszyklus sendet, der sich in Abhängigkeit von den gewünschten Betriebsbedingungen für die Pumpe ändert, wobei die Steuerung auf den Motor wirkt, um die Betriebsbedingungen auf die Pumpe anzuwenden.

3. Verfahren nach einem der vorhergehenden Ansprüche, bei dem die Flüssigkeit eine wässrige Harnstofflösung ist.

4. Verfahren nach einem der vorhergehenden Ansprüche, bei dem die Pumpe in eine in dem Tank eingetauchte Grundplatte integriert ist, welche auch andere aktive Komponenten des Tanks umfasst.

5. Verfahren nach dem vorhergehenden Anspruch, bei dem die Grundplatte ein Heizelement umfasst.

6. Verfahren nach dem vorhergehenden Anspruch, bei dem eine Flüssigkeitszuführleitung aus dem Behälter kommt und eine Flüssigkeitsrückführleitung am Tank ankommt und bei dem diese Leitungen auch mit einem Heizelement ausgestattet sind.

7. Verfahren nach dem vorhergehenden Anspruch, bei dem die Pumpe eine Rotationspumpe ist und bei dem die Leitungen nach jeder Benutzung der Pumpe gereinigt werden, indem ihre Rotationsrichtung für die benötigte Zeit, um die in der Zuführ- und Rückführleitung befindliche Flüssigkeit zum Tank zurückzubefördern, umgekehrt wird.

8. Verfahren nach Anspruch 6 oder 7, bei welcher die Zeit t1 die minimale Zeit ist, die benötigt wird, um ein Flüssigkeitsvolumen zu erhalten, welches dem Volumen der Einspritzleitung, der Rückführleitung und der Komponenten in diesen Leitungen entspricht.

9. Verfahren nach Anspruch 2, bei dem die Steuerung mit einem Drucksensor verbunden ist und bei dem die Steuerung in einer Schleife den Solldruck mit dem vom Sensor gemessenen Wert vergleicht und infolgedessen auf die Drehzahl des Motors wirkt, um zu versuchen, den Druck auf den Sollwert zu stabilisieren.

10. Verfahren nach dem vorhergehenden Anspruch, bei dem während der Periode t2 der Druck periodisch gemessen wird und ein mathematisches Kriterium basierend auf der der Abweichung auf die Druckmessung und auf den Solldruck angewendet wird.

11. Verfahren nach dem vorhergehenden Anspruch, bei dem, wenn der Druck nicht stabil ist und/oder am Ende von mehreren Iterationen nicht in einem akzeptablen Toleranzbereich in Bezug auf den Solldruck ist, die Steuerung die Pumpe stoppt und Informationen, nach denen die Pumpe nicht in der Lage gewesen ist, gestartet zu werden, an das ECM sendet.

## Revendications

1. Procédé pour le démarrage d'une pompe destinée à pomper un liquide contenu dans un réservoir et qui est une solution d'additif pour injection dans la ligne d'échappement d'un moteur à combustion interne et à débiter une pression de sortie substantiellement constante (pression de consigne), selon lequel :
1. on détermine la température (T1) du liquide contenu dans le réservoir et on la compare avec une température de consigne (T0) ;
2. si la température (T1) est supérieure à la température de consigne (T0), on met la pompe en marche ;
3. si la température (T1) est inférieure ou égale à la température de consigne (T0), on chauffe le réservoir pendant une durée t1 ; puis
4. on met la pompe en marche pendant une durée t2 au cours de laquelle on mesure la pression en sortie de la pompe ;
5. si cette pression est stable et dans une marge acceptable de la pression de consigne, on maintient la pompe en marche ;
6. si cette pression n'est pas stable et/ou n'est pas dans la marge acceptable de la pression de consigne, on arrête la pompe et on chauffe le réservoir pendant une durée t3 au bout de laquelle on reprend les étapes 4 à 6.

2. Procédé selon la revendication précédente, dans lequel la pompe est entraînée par un moteur et est gérée par un contrôleur, et dans lequel une unité de commande électronique (ECM ou Electronic Control Module) envoie au contrôleur un signal de commande de type PWM («Pulse Width Modulation») ayant un rapport cyclique variable en fonction des conditions de fonctionnement souhaitées pour la pompe, le contrôleur agissant sur le moteur pour appliquer lesdites conditions de fonctionnement à la pompe.

3. Procédé selon l'une quelconque des revendications précédentes, dans lequel le liquide est une solution aqueuse d'urée.

4. Procédé selon l'une quelconque des revendications précédentes, dans lequel la pompe est intégrée à une embase immergée dans le réservoir qui intègre également d'autres composants actifs du réservoir.

5. Procédé selon la revendication précédente, dans lequel l'embase intègre un élément chauffant.

6. Procédé selon la revendication précédente, dans lequel une ligne d'alimentation en liquide part du réservoir et une ligne de retour de liquide arrive au réservoir et dans lequel ces lignes sont également munies d'un élément chauffant.

7. Procédé selon la revendication précédente, dans lequel la pompe est une pompe rotative et dans lequel les lignes sont purgées après chaque utilisation de la pompe en inversant son sens de rotation le temps nécessaire pour ramener le liquide contenu dans les lignes d'alimentation et de retour, vers le réservoir.

8. Procédé selon la revendication 6 ou 7, dans lequel la durée t1 est la durée minimale requise pour obtenir un volume de liquide égal au volume de la ligne d'injection, de la ligne de retour et des composants sur ces lignes.

9. Procédé selon la revendication 2, dans lequel le contrôleur est relié à un capteur de pression et dans lequel le contrôleur compare en boucle la valeur de consigne de la pression avec la valeur mesurée par le capteur et agit en conséquence sur la vitesse de rotation du moteur pour tenter de stabiliser la pression à la valeur de consigne.

10. Procédé selon la revendication précédente, dans lequel au cours de la période t2, on mesure périodiquement la pression et on applique aux mesures de pression et à la pression de consigne, un critère mathématique basé sur la variance.

11. Procédé selon la revendication précédente, dans lequel si la pression n'est pas stable et/ou n'est pas dans une marge acceptable vis-à-vis de la pression de consigne au bout de plusieurs itérations, le contrôleur arrête la pompe et envoie à l'ECM une information selon laquelle la pompe n'a pas pu être démarrée.
